Europäisches Patentamt

European Patent Office

Office européen des brevets

(19)

(11) Publication number: **0 026 976**
**B1**

(12) **EUROPEAN PATENT SPECIFICATION**

(45) Date of publication of patent specification: **24.08.83**

(21) Application number: **80302998.2**

(22) Date of filing: **29.08.80**

(51) Int. Cl.³: **F 16 L 1/00, F 16 L 55/00,
E 03 F 3/06, E 02 B 11/00,
E 02 D 7/18**

(54) Method of and apparatus for restoring the diameter of plastic pipes located in an earth encompassing situ.

(30) Priority: **04.09.79 US 72073**
**26.11.79 US 97395**

(43) Date of publication of application:
**15.04.81 Bulletin 81/15**

(45) Publication of the grant of the patent:
**24.08.83 Bulletin 83/34**

(84) Designated Contracting States:
**AT BE CH DE FR GB IT LI LU NL SE**

(56) References cited:
**AT - B - 334 295**
**DE - C - 1 171 830**
**GB - A - 1 434 096**

(73) Proprietor: **Williams, Richard Lee**
**9180 Parker Road**
**Harrod Ohio 45850 (US)**

(72) Inventor: **Williams, Richard Lee**
**9180 Parker Road**
**Harrod Ohio 45850 (US)**

(74) Representative: **Rennie, Ian Malcolm et al,**
**BOULT, WADE & TENNANT 27 Furnival Street**
**London EC4A 1PQ (GB)**

Courier Press, Leamington Spa, England.

# Method of and apparatus for restoring the diameter of plastic pipes located in an earth encompassing situ

This invention relates to new and improved methods and apparatus for reconstituting the internal diameters of plastic sewer, water or drain pipes after the pipe is placed in and permanently located in situ in an earth bed or other underground earth base or covered location by vibration compacting or relocation of the bedding materials; and which, in addition, enhances the prevention of subsequent normally caused deformations in the diameter of such plastic pipes.

Heretofore, difficulties have been encountered in the use of plastic pipes subject to such diameter deformation in sewer, water and drain lines primarily because, when the earth covering back fill is applied to such pipes, the weight of the earth causes a deformation in the internal diameter of the plastic pipes, i.e., from circular to egg-shaped. Such egg-shaped deformations, of course, tended to result in leakage between the connected ends of the plastic pipe sections or at the juncture of the connected ends of the plastic pipe sections or at the juncture of the connections therebetween resulting in water waste, sewage leakage contamination and similar ecological problems.

As a consequence, in at least one country, government regulations have been promulgated which not only define the earth covering requirements for such pipes in ditches, trenches, excavations and the like, but also define the maximum allowable deformation of the internal diameter of the plastic pipes.

At present, such government regulations permit such diameter deformation only to less than 5 percent of the internal diameter of the plastic pipe prior to its being buried in the earth and/or other bed materials.

To assure that this diameter deformation limitation is met by contractors installing such plastic pipes, these government regulations also set forth certain testing techniques, one of which is the commonly known ball technique. In this technique, a metal ball having a diameter which is comparable to 95 percent of the inside diameter of the plastic pipe is pulled through the pipe when in situ, generally from convenient locations, such as from manhole to adjacent manhole. In the event that the ball sticks in the pipe anywhere between the manhole inlet and the adjacent manhole outlet, the government regulations require the contractor to dig up the entire section of plastic pipe between the manholes and substitute new pipe and to rebury the new pipe, resulting in a considerable unexpected financial and time loss to the contractor.

Furthermore from GB—A—1,434,096 there is known a method and an apparatus for compacting the earth cover or other backfill around buried plastic pipes by use of a vibrating device introduced into the pipe.

These and other problems, difficulties and disadvantages of the prior art, among others, are substantially overcome with the present invention by the provision of a vibrator-compactor device which can be moved through the plastic pipe after it is located in situ and which, because of the effects of the vibration caused thereby, tends to relocate and compact the bedding material, dirt or earth surrounding the pipe, while at the same time, permitting the stressed pipe to return substantially to its original diameter, i.e., the diameter existing prior to the pipe being buried in situ. The vibrator-compactor device of the present invention not only performs the testing function to comply basically with the government requirements, but also acts to reconstitute or reshape the plastic pipe while in situ. The vibrator-compactor device of the present invention is inexpensive to manufacture, and, indeed, can be manufactured to provide a variety of diameter sizes to fit the inside diameter of most normally employed sewer, water and drain line plastic pipes.

It is, therefore, object of the present invention to provide a method and an apparatus for reconstituting plastic pipe deformed diameters while in situ to within at least 95 percent of the original diameter of the pipe existing before laying and covering of the pipe in the tranch, ditch or excavation by passing a vibrator device through the pipe which vibrations also compact and densify the bed filler materials below and adjacent the pipe.

These objects, features and advantages of the present invention will become readily apparent to one skilled in the art from a careful consideration of the following detailed description, when considered in conjunction with the accompanying drawing, wherein like reference numerals refer to like and corresponding parts throughout the several views, and wherein:

Figure 1 illustrates schematically a system employing the methods and apparatus of the present invention to reconstitute the diameter of plastic pipes while in situ;

Figure 2 is an enlarged fragmentary view taken along line 2—2 of Figure 1;

Figure 3 is also an enlarged fragmentary view taken along line 3—3 of Figure 1;

Figure 4 is a perspective view in partial section illustrating a vibrator-compactor device constructed in accordance with the present invention;

Figure 5 is a side view in partial section of the device of Figure 4;

Figure 6 is a fragmentary view in perspective illustrating the new and improved swivel means of the present invention for pneumatically actuating the motor of the device of Figures 4 and 5;

Figure 7 is a side view in section of a pneumatic adaptor constructed in accordance with the present invention;

Figure 8 is a bottom view in elevation of the adaptor of Figure 7.

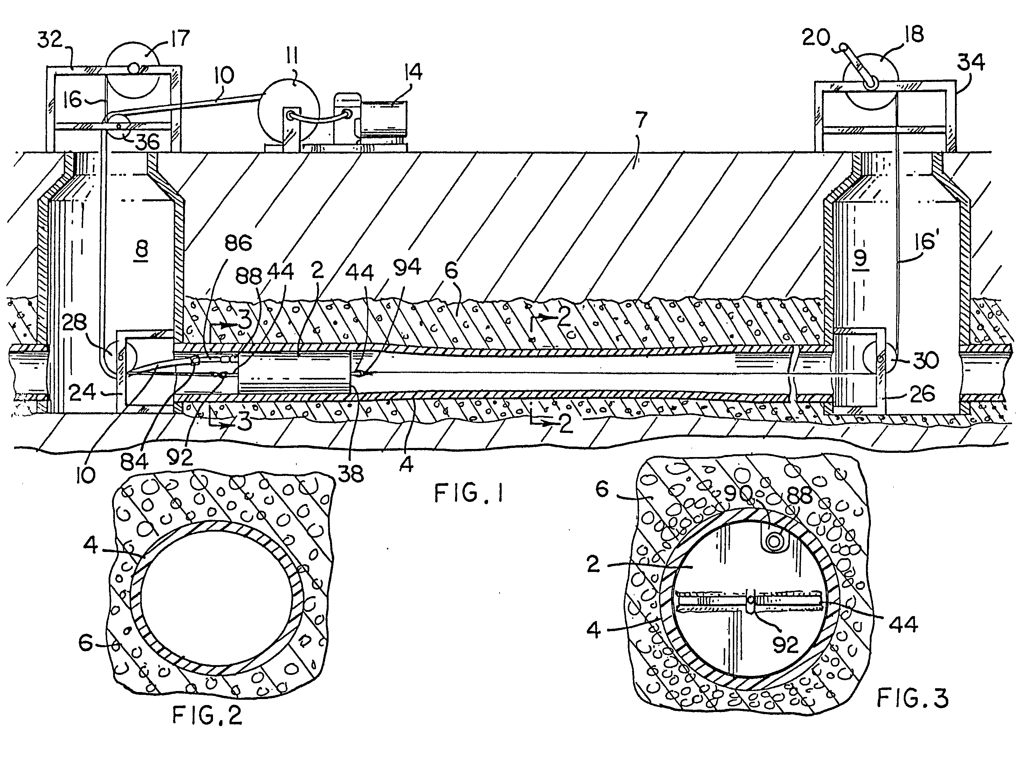

Referring to Figure 1, there is disclosed a pneumatically actuatable vibrator-compactor device 2 constructed in accordance with the present invention shown operationally disposed in a conventional sewer plastic pipe 4 which is located in a bed of pea gravel material 6 having a back fill 7 of earth or dirt thereupon.

Access to the pipe 4 is provided by a pair of spaced manholes 8 and 9.

In order to provide a source of pneumatic pressure to operate the vibrator-compactor device 2, a compressor 14 is located on the surface of the back fill and supplies pressurized air to a movable hose 10 which is fed off of a reel 11. The hose 10 is connected to the device 2 in a manner hereinafter described.

In accordance with the present invention, the vibrator-compactor device 2 is pulled through the pipe 4 by means of a cable system which includes a cable 16 carried by a takeoff reel 17 located above the ground level. Cable 16 is connected to the device 2 at one end thereof. Cable 16 acts in unison with a second cable 16' connected to the device 2 and to a take-up reel 18 actuatable by a hand crank 20 or by other means to move the device 2 and cable 16' in the direction shown by the arrows in Figure 1. The manholes 8 and 10 are each provided with a removable reel spacer 24 and 26, respectively, to space the spacer reels 28 and 30 from the pipe 4 and adjacent dirt to prevent breakage of the cables 16 and 16', as well as the hose 11. Similarly, removable spacers 32 and 34 are provided for supporting the cable reels 17 and 18. It is noted that a guide spacer reel 6 is also provided on stantion 32 for the pneumatic hose 10 for spacing of the hose 10 with respect to the reel 26. Reel 28 spaces not only the cable 16 unit, but also the hose 10 adjacent the spacer 24.

As appears in Figure 2, the plastic pipe 4 has a diameter deflection resembling an egg shape as a result of the weight on top thereof caused by weight of the earth or dirt and bed filler material 6.

In Figure 3 there is shown a comparison with Figure 2 of the effects of the use of the vibrator-compactor device 2 of the present invention on the distorted or deflected diameter of the pipe 4 as well as the compacting effect of use of the present invention on the bed filler material 30 adjacent the horizontal center line of the pipe and as well as under the pipe.

The vibrations generated by the device 2, as it moves through the pipe 4, also tend to compact the surrounding filler material; thus permitting return of the pipe diameter dimension to substantially that diameter which existed before the pipe was placed in the ditch, trench or excavation and covered with the filler bed material and the back fill, such as earth. It has also been observed in actual tests performed that the device 2 transmits vibrations ahead of itself (upstream of the device) and thus initiates compacting of the filler bed material before the device reaches the location of such forwardly transmitted vibrations.

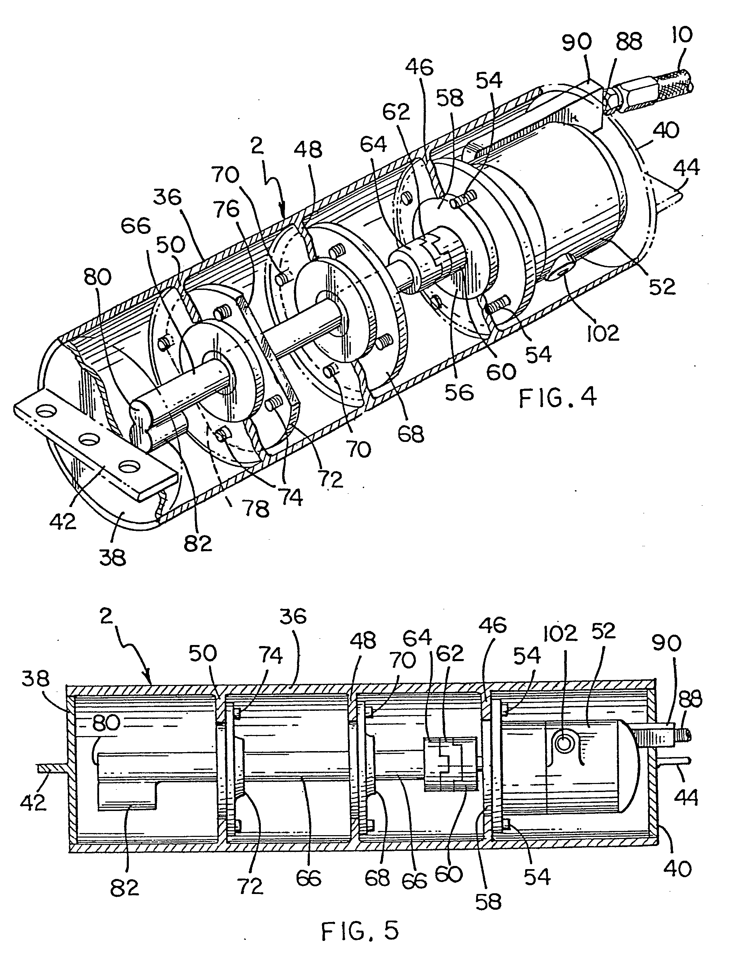

As shown in Figures 4 and 5, the device 2 includes a cylindrical housing 36 having opposite end walls 38 and 40. The end walls 38 and 40 carry mounting flanges 42 and 44 which are connectable by the cables 16' and 16, respectively.

The cylinder 36 is hollow and has three internal spaced partition walls. Partition wall 46 is provided to fixedly carry the pneumatically operated motor 52, as by four bolts 54. The wall 46 is apertured as at 56 to permit reception of a support 58 for the motor shaft 60. The motor shaft 60 has a drive coupler 62 which is connected to a corresponding coupler 64 carried by the vibrator drive shaft 66.

In accordance with the present invention, the drive shaft 66 is carried in bearing means which, as shown in Figure 4, comprises a first bearing means 68 fixedly carried by the partition wall 48 which is adjacent the partition wall 46. Means such as bolts 70 may be employed to removably mount the bearing means 68 in press fitting engagement with the partition wall 48.

The bearing means for the shaft 66 also include a second bearing means 72 carried by the partition wall 50 to which it is secured in press fitting engagement as by bolts 74.

In order to permit removal and insertion of the bearing means 72 in the housing 36, two opposite sides 76 and 78 of the bearing 72 are sectioned, as shown in Figure 4, to provide flat surfaces on opposite sides of the bearing 72.

It will be observed that the shaft 66 passes through both bearings 68 and 72 and at its end 80, as viewed in Figure 4, the shaft 66 carries an offset mass or weight 82 which is provided to induce or generate the vibrations of the device 2.

Fluid-tight seal means (not shown) are provided for the opposite end walls 38 and 40 in order to contain a supply of lubricating motor oil. The volume of the cylinder 36 between the end wall 38 and partition wall 46 is filled by means not shown to approximately one-third by volume with the oil for such lubricating purposes. It has been observed that such lubricating oil enhances the torque characteristics of the vibrating shaft and associated offset mass or weight 82.

The weight of the mass 82 required is readily determinable in terms of the amplitude of the vibrations desired for any particular size device 2 or diameter of the housing 36.

The motor 52 may be that known as the "MR 10 Series Rotary Vane Air Motor" sold under that name by the Pneutronics Division of Gardner-Denver Company of Grand Haven, Michigan. Preferably, the motor is that designated by the aforementioned company as the 74098 AA 3 Model. The bearings 68 and 72 may be the type of bearings sold under the "FC 900 Flange Cartridge" designation by the Browning Mfg. Division of Emerson Electric Company of Maysville, Kentucky.

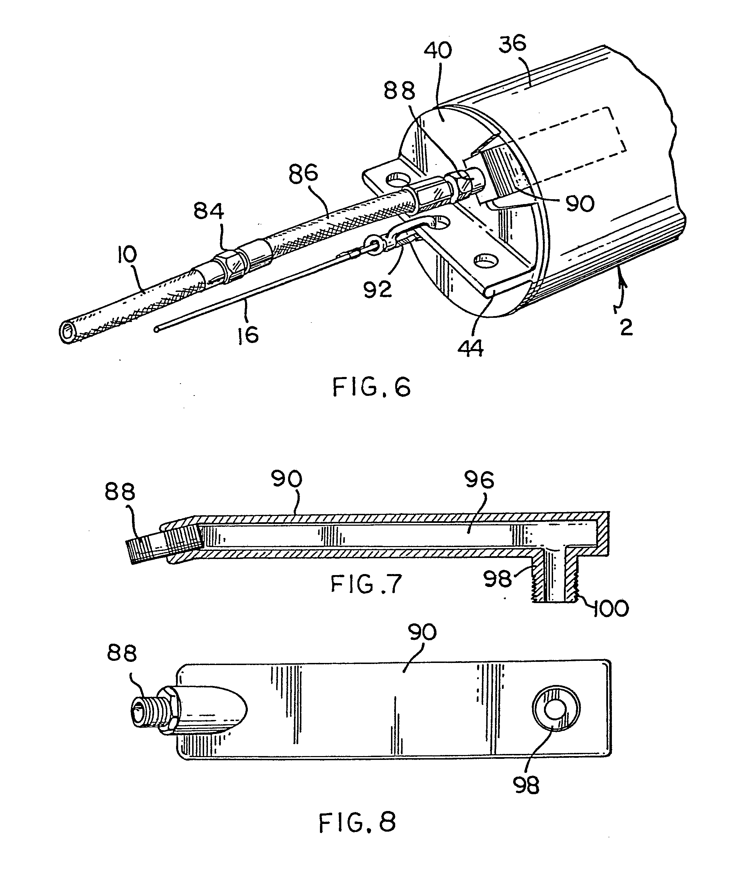

Referring now to Figure 6, it will be observed that the pneumatic hose 10 includes a swivel joint connector 84 connecting to a short hose length 86 through a nipple 88 to a hose adaptor means 90 carried by the housing 36. In addition, the cable 16 carries a swivel snap hook or ring 92 for mounting of the cable 16 to the flange 44. Similarly, cable 16' is connected by a swivel snap hook 94 to the end wall 38 of the housing 36.

In Figures 7 and 8 are shown the details of the adaptor means 90. Adaptor means 90 includes an axial fluid flow passageway 96 which communicates with the nipple 88 to permit flow of air therethrough in the direction shown by the arrows in Figure 7. The adaptor 90 has an outlet flow nipple 98 threaded as at 100 for connection with the air inlet (not shown) of the motor 52.

The motor 52 also has an air outlet 102 (Figures 4 and 5) for discharge of air from the motor through apertures (not shown) in the housing 36. The air discharged from the outlet 102 passes to the rear of the device 2 and, it has been found, provides a propelling and rotating effect to the device 2 which tends to move the device 2 forwardly through the pipe 4. Because of this rotational effect, the swivel joint 84 and swivel snap hooks 92 and 94 have been provided.

In operation, the device 2 is placed in the pipe 4 from one manhole 8, with the hose 10 connected thereto, as well as the cables 16 and 16'. The compressor 14 is actuated to cause operation of the motor 52 which, in turn, rotates the shaft 66 carrying the offset vibrator mass 82 to cause vibrations to be transmitted from the housing and through the bearings 68 and 74 to the filler bed material in which the pipe 4 reposes. Operation of the take-up reel causes movements of the device 2 through the pipe 4 in the direction of manhole 9 (Figure 1) asserted by the effects of the air being discharged from the motor 52. The vibrations of the device 2 cause compacting of the filler material under and around the pipe 4 as the device 2 moves through the pipe. Movement of the device 2 through the plastic pipe section causes the deformed pipe to return to substantially its original diameter throughout its length, which existed before the pipe 4 was introduced into the trench and the fill and earth placed thereon.

It will be appreciated that, to conform to the government regulations, the diameter of the vibrator-compactor housing 36 need only be slightly less than that of the inside diameter of the pipe. It will be further appreciated that depending upon the size of the plastic pipe involved, the diameter of the housing 36 could be changed accordingly, as well as the weight, size and shape of the vibrator eccentric mass 82.

It will be expressly understood that the present invention relates to pipes made of plastic, fiberglass reinforced plastic pipes or other flexible conduit materials having the tendency to deform or to deflect when subjected to the weight of the pipe encompassing earth or filler bed material. It will also be appreciated that the present invention provides stress relief not only to the pipe itself but also the gaskets or other devices connecting pipe sections, one to the other.

While there have been disclosed particular embodiments of the present invention, other embodiments will become readily apparent to one skilled in the art and, accordingly, this invention should be considered to be limited in scope only by the accompanying claims.

## Claims

1. The method of restoring the cross-sectional shape of a plastic sewer or water pipe (4) located in an earth and bedding material (6) encompassing in situ which pipe is deflected out of round by the weight of earth and bedding material (7) backfilled on top of the pipe substantially to its original shape characterized by the steps of:

(a) introducing into one end of the pipe a cylindrical vibrator-compactor device (2) having an outside diameter slightly less than the inside diameter of the pipe (4),

(b) initiating vibration of the device (2) to transmit vibrations through the wall of the pipe (4) to reform the bedding material (6, 7) to a higher density and stress relieve the pipe so as to restore the inside diameter of the pipe to within at least 95 percent of its original dimension existing before the pipe has been placed in situ, and

(c) propelling the device (2) through the entire length of the installed pipe (4) substantially completely backfilled to the level of the original surface.

2. The method as claimed in claim 1 wherein the vibration of said device (2) compacts the earth bed at least adjacent the sides and bottom of the plastic pipe (4).

3. A device for substantially restoring the cross-sectional shape of a plastic sewer or water pipe (4) located in an earth and bedding material (6, 7) encompassing in situ which pipe is deflected out of round by the weight of earth and bedding material (7) backfilled on top of the pipe substantially to its original shape comprising a cylindrical housing (36) having an outside diameter slightly less than the inside diameter of the pipe (4) sufficient to move the longitudinal, axial pathway defined by the inside diameter of the pipe, means (42, 44) connecting to one end of the cylindrical housing (36) for moving said housing through the pipe, and vibrating means (82) in said housing actuatable to transmit vibrations through said housing and through the pipe, whereby transmitted vibrations act on the plastic pipe to reform the bedding material to a higher density and stress relieve the pipe so as to restore the inside diameter of the pipe to within at least 95 percent of its original dimension existing before the pipe has been placed in situ.

4. A device as claimed in claim 3 and including a motor (52) in said housing (36) for driving said vibration means (82).

5. A device as claimed in claim 4 wherein said motor is operated by pneumatic actuation means (10, 14).

6. A device as claimed in claim 5 wherein said pneumatic actuation means (10, 14) includes movable hose means (10).

7. A device as claimed in claim 6 including swivel means (84, 88) connecting said hose means (10) and said motor (52) to permit rotation of said housing (36) about its longitudinal axis relative to said pipe.

8. A device as claimed in any of claims 4 to 7 and including bearing means (68, 72) in said housing (36) for supporting a vibration means shaft when coupled to said motor, and a vibration means shaft (66) coupled to said motor (52) and supported by said bearing means, and wherein said vibrating means (82) is carried by said shaft adjacent the end of the housing opposite the end of the housing in which the motor is located.

9. A device as claimed in claim 8 wherein said bearing means (68, 72) comprises at least a pair of removable bearing assemblies carried in spaced relation by a pair of spaced partition walls (48, 50) located in said housing between said motor means and said vibrator means.

10. A device as claimed in either claim 8 or claim 9 wherein said vibrating means (82) is a mass of predetermined weight carried by said vibration shaft (66).

11. A device as claimed in any of claims 3 to 10 and including detachable means (16, 18, 20) to move the housing through the pipe, and means (92) to detachably connect the detachable means to said housing.

**Patentansprüche**

1. Verfahren zur Widerherstellung der Querschnittsform eines in Erde und Bettungsmaterial (6) rundum eingebetteten Kunststoffrohrs (4) einer Abwasserleitung oder Wasserleitung, das durch das Gewicht der Erde und des Bettungsmaterials, die auf das Rohr aufgefüllt worden sind, aus seiner runden Gestalt verformt ist, in ihrer ursprünglichen Form, dadurch gekennzeichnet, daß

a) in ein Ende des Rohrs eine zylindrische Schwingungs-und-Verdichtungsvorrichtung (2) eingeführt wird, deren Außendurchmesser etwas kleiner ist als der Innendurchmesser des Rohrs (4),

b) die Vorrichtung (2) in Schwingungen versetzt wird, um Schwingungen durch die Wand des Rohrs zu schicken und dadurch das Bettungsmaterial (6, 7) zu verdichten und das Rohr zu entlasten, so daß der Innendurchmesser des Rohrs zu wenigstens 95% in seiner ursprünglichen Abmessung wieder hergestellt wird, die er vor dem Einbetten des Rohrs hatte, und

c) die Vorrichtung (2) durch die ganze Länge des installierten Rohrs (4) vorangetrieben wird, das praktisch vollständig auf das Niveau der ursprünglichen Oberfläche aufgefüllt ist.

2. Verfahren nach Anspruch 1, dadurch gekennzeichnet, daß die Schwingungen der Vorrichtung (2) das Erdbett wenigstens an den Seiten und dem Boden des Kunststoffrohrs (4) verfestigen.

3. Vorrichtung zur mindestens annähernden Wiederherstellung der Querschnittsform eines in Erde und Bettungsmaterial (6, 7) rundum eingebetteten Kunststoffrohrs einer Abwasser- oder Wasserleitung, das durch das Gewicht der Erde und des Bettungsmaterials (7), die auf das Rohr aufgefüllt worden sind aus seiner runden Gestalt verformt worden ist, in ihrer ursprünglichen Form, gekennzeichnet durch ein zylindrisches Gehäuse (36), dessen Außendurchmesser etwas kleiner ist als der Innendurchmesser des Rohrs (4), und zwar ausreichend, um in dem von dem Innendurchmesser des Rohrs begrenzten Kanal in Längsrichtung axial bewegbar zu sein, ferner Vorrichtungsteile (42, 44) jeweils an einem Ende des zylindrischen Gehäuses (36) zum Bewegen des Gehäuses durch das Rohr und ein Schwingungselement (82) in dem Gehäuse, das bei Betätigung Schwingungen durch das Gehäuse und durch das Rohr schickt, wobei die ausgesendeten Schwingungen auf das Kunststoffrohr einwirken, um das Bettungsmaterial zu einer höheren Dichte zu verdichten und das Rohr zu entlasten, so daß der Innendurchmesser des Rohrs zu wenigstens 95% der ursprünglichen Abmessung, die das Rohr vor dem Einbetten hatte, wieder hergestellt wird.

4. Vorrichtung nach Anspruch 3, dadurch gekennzeichnet, daß in dem Gehäuse (36) ein Motor (52) zum Antreiben des Schwingungselements (82) angebracht ist.

5. Vorrichtung nach Anspruch 4, dadurch gekennzeichnet, daß der Motor von einem pneumatischen Betätiger (10, 14) betrieben wird.

6. Vorrichtung nach Anspruch 5, dadurch gekennzeichnet, daß der pneumatische Betätiger (10, 14) eine bewegliche Schlauchleitung (10) aufweist.

7. Vorrichtung nach Anspruch 6, dadurch gekennzeichnet, daß Drehgelenke (84, 82) die Schlauchleitung (10) mit dem Motor (52) derart verbinden, daß sich das Gehäuse (36) relativ zum Rohr um seine Längsachse drehen kann.

8. Vorrichtung nach einem der Ansprüche 4 bis 7, gekennzeichnet durch eine Lageranordnung (68, 72) in dem Gehäuse (36) und durch eine Welle (66) des Schwingungselements, die mit dem Motor (52) kuppelbar ist und in der Lageranordnung gelagert ist, wobei das Schwingungselement (82) an der Welle nächst dem zu dem den Motor enthaltenden Gehäuseende entgegengesetzten Gehäuseende angebracht ist.

9. Vorrichtung nach Anspruch 8, dadurch gekennzeichnet, daß die Lageranordnung (68, 72) wenigstens zwei wegnehmbare Lager umfaßt, die von zwei beabstandeten Trennwänden (48, 50), die in dem Gehäuse zwischen dem Motor und dem Schwingungselement angebracht sind, im Abstand voneinander gehalten sind.

10. Vorrichtung nach Anspruch 8 oder 9, dadurch gekennzeichnet, daß das Schwingungselement (82) eine Masse mit vorgegebenem Gewicht ist, die an der Schwingungswelle (66) sitzt.

11. Vorrichtung nach einem der Ansprüche 3 bis 10, gekennzeichnet durch einen wegnehmbaren Mechanismus (16', 18, 20) zum Bewegen des Gehäuses (36) durch das Rohr und durch ein Verbindungsglied (94) zum lösbaren Verbinden des wegnehmbaren Mechanismus mit dem Gehäuse.

## Revendications

1. Procédé pour restituer la forme de section droite d'un tuyau d'égout ou d'eau 4 en matière plastique, placé dans une masse de terre et de remplissage 6 entourant in situ ledit tuyau dont la rotondité est déformée par le poids de la masse de terre et de remplissage (7) replacé sur le haut de tuyau, essentiellement à son profil initial, caractérisé par les étapes suivantes:

a) introduction dans une extrémité du tuyau d'un dispositif cylindrique de vibration-compactage 2 ayant un diamètre extérieur légèrement inférieur au diamètre intérieur du tuyau (4),

b) mise en vibration du dispositif (2) pour transmettre des vibrations au travers de la paroi du tuyau (4) afin d'augmenter la densité de la matière d'entourage (6, 7) et de réduire les contraintes sollicitant le tuyau en vue de restituer le diamètre intérieur du tuyau d'au moins 95% de sa dimension initiale existant avant que le tuyau ait été placé in situ, et

c) propulsion du dispositif (2) sur toute la longueur du tuyau installé (4) avec rétablissement essentiellement complet jusqu'au niveau de sa surface initiale.

2. Procédé selon la revendication 1, caractérisé en ce que la vibration du dispositif (2) assure le compactage du lit de terre au moins dans une zone adjacente aux côtés et à la base du tuyau en matière plastique (4).

3. Appareil pour restituer essentiellement la forme de section droite d'un tuyau d'égout ou d'eau (4) en matière plastique placé dans une masse de terre et de remplissage (6, 7) entourant le tuyau in situ, ce tuyau ayant été déformé par le poids de la masse de terre et de remplissage (7) qui est rechargé sur le haut du tuyau, essentiellement à sa forme d'origine, comprenant un carter cylindrique (36) présentant un diamètre extérieur légèrement inférieur au diamètre intérieur du tuyau (4) suffisamment pour permettre son déplacement sur le trajet axial longitudinal défini par le diamètre intérieur du tuyau, des moyens (42, 44) reliés à une extrémité du carter cylindrique (36) pour faire déplacer ledit carter au travers du tuyau, et un moyen de vibration (82) placé dans ledit carter et pouvant être actionné pour transmettre des vibrations par l'intermédiaire dudit carter et par l'intermédiaire dudit tuyau afin que les vibrations transmises agissent sur le tuyau en matière plastique pour redonner à la matière d'entourage une plus grande densité et pour réduire les contraintes exercées sur le tuyau en vue de ramener le diamètre intérieur du tuyau à au moins 95% de sa dimension d'origine existant avant que le tuyau ait encore été placé in situ.

4. Appareil selon la revendication 3, caractérisé en ce qu'il comprend dans ledit carter (36) un moteur (52) pour entraîner ledit moyen de vibration (82).

5. Appareil selon la revendication 4, caractérisé en ce que ledit moteur est sollicité par un moyen d'actionnement pneumatique (10, 14).

6. Appareil selon la revendication 5, caractérisé en ce que ledit moyen d'actionnement pneumatique (10, 14) comprend un flexible mobile (10).

7. Appareil selon la revendication 6, caractérisé en ce qu'il comprend des moyens pivotants (84, 88) assurant la liaison du flexible (10) avec le moteur (52) pour permettre une rotation dudit carter (36) autour de son axe longitudinal par rapport audit tuyau.

8. Appareil selon l'une quelconque des revendications 4 à 7, caractérisé en ce qu'il comprend des paliers (68, 72) prévus dans ledit carter (36) pour supporter un arbre du moyen de vibration lorsqu'il est couplé avec ledit moteur, et un un arbre de moyen de vibration (66) relié audit moteur (52) et supporté par lesdits paliers, et an ce que ledit moyen de vibration (82) est porté par ledit arbre dans une zone adjacente à l'extrémité du carter qui est opposée à l'extrémité du carter dans laquelle le moteur est placé.

9. Appareil selon la revendication 8, caractérisé en ce que lesdits paliers (68, 72) comprennent au moins deux ensembles de paliers amovibles qui sont portés en relation espacée par deux cloisons séparatrices (48, 50) placées dans ledit carter entre ledit moteur et ledit moyen de vibration.

10. Appareil selon l'une des revendications 8 ou 9, caractérisé en ce que ledit moyen de vibration (82) est une masse d'un poids prédéterminé qui est portée par ledit arbre de vibration (66).

11. Appareil selon l'une quelconque des revendications 3 à 10, caractérisé en ce qu'il comprend des moyens démontables (16, 18, 20) pour faire déplacer le carter au travers du tuyau et un moyen (92) pour relier de façon séparable les moyens démontables audit carter.

FIG. 1

FIG. 2

FIG. 3

FIG. 4

FIG. 5

FIG. 6

FIG. 7

FIG. 8